# EUROPEAN PATENT APPLICATION

(11) **EP 2 200 250 A1**
(43) Date of publication of application: **23.06.2010**
(21) Application number: 08254070.9
(22) Date of filing: 19.12.2008
(51) Int. Cl.: H04L 29/06

(54) **Terminal**

(71) Applicant: BRITISH TELECOMMUNICATIONS public limited company, London EC1A 7AJ (GB)
(72) Inventor: The designation of the inventor has not yet been filed
(74) Representative: Nash, Roger William

(57) **Abstract**

The present invention provides a terminal which can receive streamed audio or video data from a communications network. The terminal comprises a unique identifier and a streaming channel is associated with that terminal's unique identifier.

## Description

The present invention relates to a terminal for receiving audio data, and in particular to a terminal for receiving audio or video data that is streamed over the internet.

Internet radios are devices that have a connection to the internet, for example via a WiFi connection, and that are able to receive audio data that is streamed over the internet. In a manner that is analogous to the operation of convention radio sets, a user selects a station that they wish to listen to, the associated data is received and then converted into a audible signal. Rather than, for example, rotating a dial to select the frequency of a desired radio station or pressing a button which is associated with a radio station the selection of a station causes an internet radio to send a request to URL that is associated with the desired station. The receipt of that request then causes the appropriate data to be streamed to the internet radio for playback to the user.

According to a first aspect of the present invention there is provided a terminal for receiving data from a communications network, the terminal comprising: a network interface for receiving data from the communications network; means for decoding data received from the communications network; and a unique terminal identifier wherein, in use, the terminal receives data from a transmission channel which is associated with the unique terminal identifier.

The received data may comprise streamed audio or video data; the terminal preferably comprises a wireless network interface. The terminal may further comprise data storage means and some or all of the received data may be stored in the data storage means. The terminal may be uniquely associated with a broadband user.

A terminal according to the present invention can receive streamed audio (or video) data from a content server. A user can select the audio data to be streamed without needing to use a PC to define the users musical choices; the only requirement is that the terminal has a suitable network connection. By linking a terminal identifier to a broadband account it is possible for a user to download music and for the cost of the download to be billed to the broadband account. This avoids the need for a user to present credit card details on each occasion that a music download is required. The linkage of a terminal to a broadband account prevents anonymous use of the streaming service and thus a user can only access multimedia to which they are entitled to access. Furthermore, as the terminal is linked to an account the motivation to steal a terminal is reduced as the primary function (and value) of the terminal is in the streaming of data. If the terminal is stolen then the user can notify the service operator and the association between the terminal and streaming channel can be ended. This is different from a conventional MP3 player or mobile telephone where a stolen device can continue to be used.

According to a second aspect of the present invention there is provided a method of transmitting data to a terminal, the terminal comprising a network interface for receiving data from the communications network, means for decoding data received from the communications network and a unique terminal identifier, the method comprising the steps of: a) identifying the unique terminal identifier; and b) transmitting a data channel associated with the terminal identified in step a) to that terminal.

Embodiments of the present invention will now be described, by way of example only, with reference to the accompanying drawings in which:
Figure 1 shows a schematic depiction of a communications network which is connected to a terminal according to an aspect of the present invention;
Figure 2 shows a schematic depiction of a terminal 200 according to the present invention; and
Figure 3 shows an alternative embodiment of a terminal according to the present invention;

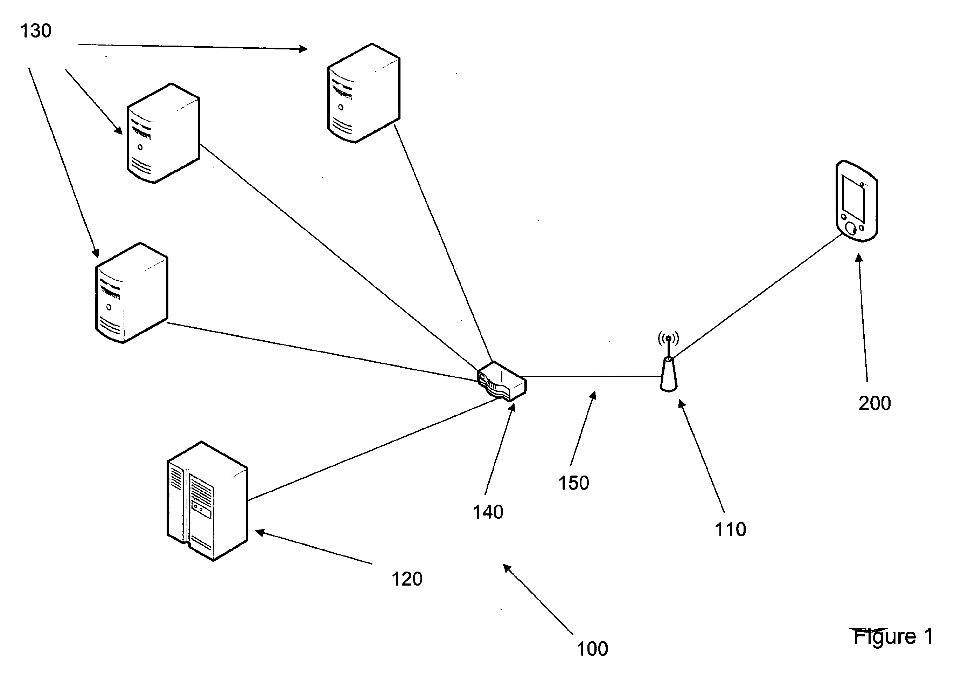

Figure 1 shows a schematic depiction of a communications network which is connected to a terminal according to an aspect of the present invention. The communications network 100 comprises a wireless access point 110, a management server 120 and one or more content servers 130. The wireless access point 110 is connected to the management server 120 and the one or more content servers 130 via a broadband connection 150, such as a digital subscriber link (DSL) or a fibre to the premises (FTTP) connection, and a router 140 or other hardware (not shown).

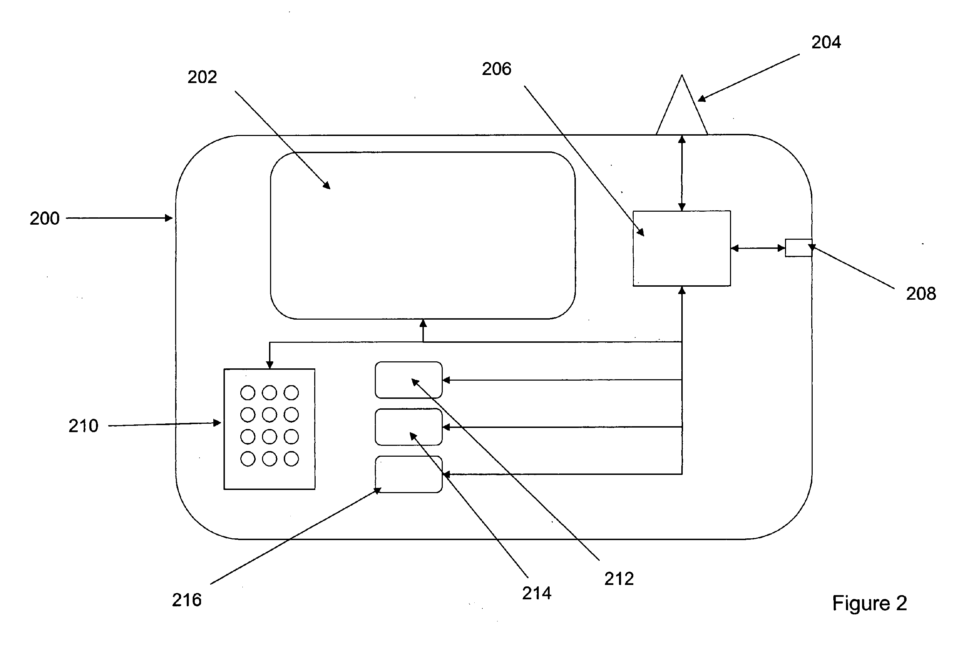

Figure 2 shows a schematic depiction of a terminal 200 according to the present invention. The terminal 200 comprises display screen 202, network interface 204, audio decoder 206, input/output port 208, user input devices 210, controller 212, internal data storage 214, and receiving means 216 for removable data storage media. In operation, data will be received from a communications network via communications interface 204, which may be, for example, a WiFi network interface, and streamed audio data is then separated and converted from digital data into an analogue signal, which is fed to the input/output port 208 for consumption by a user (for example by playing back through headphones). Metadata associated with the streamed audio data can be displayed on the display screen 202 and the user input devices 210 may be used to select music tracks which are to be streamed to the terminal, or otherwise control the operation of the terminal. If the user is able to download music to the terminal (see below) then the downloaded audio data may be stored on the internal data storage. Data storage media means (not shown), such as a SD card or similar may be inserted into the receiving means 216; the data storage media means may hold other audio data for playback or it may be used to store downloaded music. The terminal comprises a unique identifier which allows the terminal to be identified by a management server 120 or a content server 130; this unique identifier may be the MAC associated with a network interface or it may be a unique identifier which is otherwise permanently and irreversibly stored within one of the components of the terminal.

It should be understood that each of the elements referred to above are described with reference to their functionality rather than their structure. One skilled in the art of electronic design would realise that one of more of the functional elements could be implemented with a single multifunctional device, such as a DSP or FPGA or within software running on a processor.

Referring to Figure 1, when a terminal is supplied to a user, an association is made between the terminal unique identifier and the user's broadband account and a channel is created which is associated with that terminal. The channel will contain links to all of the music which can be streamed to the terminal (see below). Initially, the user will need to synchronise the terminal with the management server, for example by connecting the terminal to the broadband router and using the user input devices to initiate a synchronisation function. The user will then be shown a list of music, via the display screen, of music which is available to them and by selecting desired tracks the music will be streamed to the terminal from one of the content servers via the communication network and the broadband connection. It will be understood that if the terminal moves out of range of the wireless access point 110 then it will no longer be possible to receive streamed data but it will still be possible to play audio data that is stored within the terminal. If the user is able to access a roaming WiFi service, such as FON or The Cloud then the terminal may store the user account details and perform an auto-login when out of reach of the wireless access point 110 and in range of an access point or a roaming WiFi service such that audio streaming may continue.

The channel which is associated with the terminal comprises all of the music data which may be streamed to the user. Thus, the channel may comprise one link to live internet radio streams, pod casts, audio books or 'listen again' services such as the iPlayer service provided by the BBC. Furthermore, if the user has a catalogue of digital music data, for example ripped from CDs using iTunes or Microsoft Media Player, then this catalogue may be submitted to the management server. As the user already has a licence for the music held in the catalogue then the user will be able to access the music held in the catalogue from one or more content servers for streaming and/or downloading to the terminal.

As the terminal is uniquely associated with a user's broadband account it is possible to allow the user to purchase music for download and to debit the cost of the download from the user's broadband account. This downloaded music may be limited to replay on the terminal or it may be 'portable' in that the downloaded music may be saved to removable data media for replay on other devices. Different costs may be applied to these options but it will be understood that these issues are beyond the scope of the present invention.

It will be understood that the terminal may take a number of different forms. For example, the input/output port 208 may comprise a single USB port which can be used to connect a USB headphone, to send and/or receive data via a cabled connection to a network access point or a PC, to charge a battery, etc. The port may be any type of USB. Alternatively, or in addition, a conventional 3.5 mm jack socket may be supplied for the connection of headphones, external speakers or a phono cable that can be connected to a hi-fi system. The terminal is preferably powered by one or more batteries, which may be disposable or rechargeable. The terminal may optionally comprise a port by which a rechargeable battery may be charged, and/or the terminal operated, through a connection to a mains electricity supply. The user input devices may comprise a number of buttons which enable a user to select ad/or activate an option or on-screen icon, a numerical or QWERTY keypad as are known from mobile telephones and smart phones, a touch screen, etc.

The terminal may be provided with a dock whereby the insertion of the terminal into the dock causes the terminal to be operated by a mains electricity supply and/or a rechargeable battery to be charged. The dock may also enable the terminal to be connected to a broadband modem or router such that data may be received from the communications network, for example, streamed audio data, software or firmware updates, etc.

Different versions of a terminal according to the present invention may be provided in order to address different market segments. For example, to keep costs down, it may be preferred for the audio decoder to only decode a single digital audio format and for all of the audio data held on the content server(s) to be encoded in that particular digital audio format. For example, a WiFi radio platform design has been demonstrated which uses only two major integrated circuits - a WiFi chip and a multifunctional DSP. Alternatively, the audio decoder may be capable of decoding multiple audio formats, e.g. MP3, AAC, WMA etc., or additional software decoders may be deployed to the audio decoder, which can then execute the decoder in order to be able to decode an additional audio format. In such a case, the controller 212 may comprise a central processing unit (CPU) and some or all of the tasks normally performed by the audio decoder may be transferred to the controller.

The terminal may comprise one or more further network interfaces in addition to the WiFi network interface. These may comprise, for example, wireless interfaces such as WIMAX, HSDPA, UMTS, etc. for receiving streamed audio data or Bluetooth or IrDA for communicating with peripherals such as an appropriately enabled headset or a device (for example a mobile telephone) which has an active broadband connection. If the terminal comprises a USB connector then this may be used to connect to a fixed port of a broadband router or a LAN data port in order to make a network connection.

Although the preceding discussion has focussed on the use of the terminal to receive streamed audio data, it will be understood that such a terminal may also be used to receive streamed video. It will be readily understood that such a capability will only be a practical proposition if the broadband network and the terminal's network adaptor are capable of handling the greater data download rates that are required for video streaming. Furthermore, the terminal will require decoding components which can decode the video stream and play it back via the display screen. The video components may comprise one or more components or the controller 212 may comprise a CPU and one or more software components which can be executed to perform required video decoding. Whereas for a terminal which is only designed to receive streamed audio data it may be appropriate to use a low resolution monochrome display screen, for a terminal which is designed to also receive streamed video data it may be essential to use a higher resolution, colour display screen. Furthermore, the greater data requirements of streamed video may require the capacity of the internal data storage to be increased in order to buffer streamed video data or to store downloaded data. Such a requirement for increased data capacity may lead to the use of a hard disk drive in preference to flash memory.

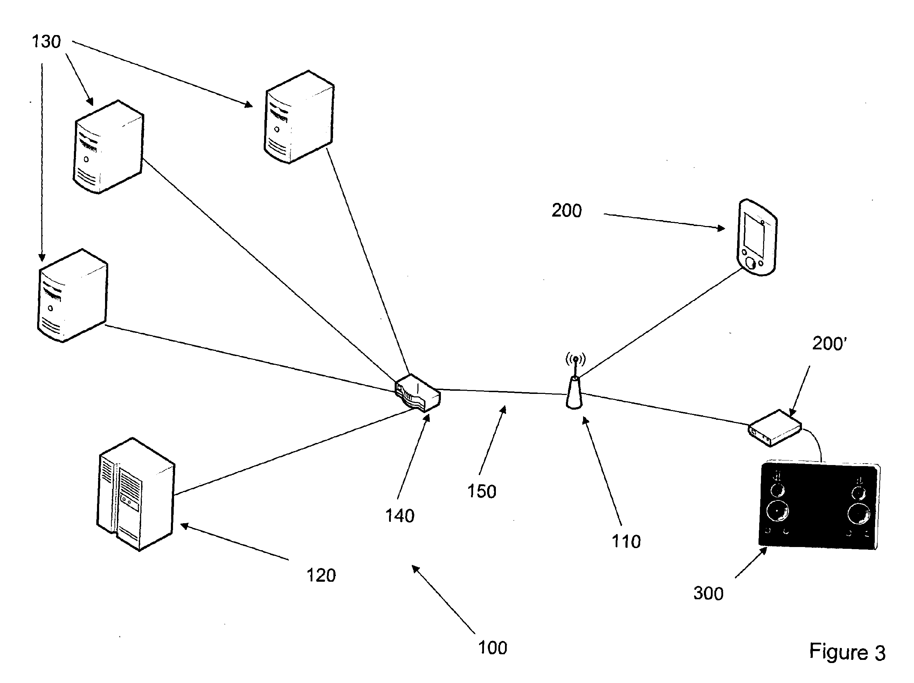

Figure 3 shows an alternative embodiment of a terminal according to the present invention. The alternative terminal 200' is connected to a stereo system 300 such that the music streamed to the terminal 200' from the communications network is played back through the stereo. The alternative terminal 200' is designed to be used as an auxiliary to terminal 200 such that the terminal 200 is used to select the music that is streamed to the alternative terminal 200' and played back through the stereo. Thus, the alternative terminal 200' may dispense with the display screen and user controls. The input/output port preferably comprises phono sockets or other suitable sockets for connecting to an audio amplifier. As the alternative terminal 200' is intended to be tethered to a stereo then it is preferred that it is powered from a mains electricity supply.

More than one terminal may be supplied to a user. In that case, each of the terminal unique identifiers are associated with the user's channel. The user may operate one of the terminals to select audio to be streamed from a content server and the selected audio is then streamed to the wireless access point before being forwarded to each of the terminals. As the user is associated with a single channel, all of the terminals will receive the same streamed audio.

## Claims

1. A terminal for receiving data from a communications network, the terminal comprising:
a network interface for receiving data from the communications network;
means for decoding data received from the communications network; and
a unique terminal identifier wherein, in use, the terminal receives data from a transmission channel which is associated with the unique terminal identifier.

2. A terminal according to claim 1, wherein the received data comprises streamed audio or video data.

3. A terminal according to Claim 1 or Claim 2 wherein the terminal comprises a wireless network interface.

4. A terminal according to any preceding Claim, wherein the terminal further comprises data storage means and some or all of the received data is stored in the data storage means.

5. A terminal according to any preceding Claim, wherein the terminal is uniquely associated with a broadband user.

6. A method of transmitting data to a terminal, the terminal comprising a network interface for receiving data from the communications network, means for decoding data received from the communications network and a unique terminal identifier, the method comprising the steps of
a) identifying the unique terminal identifier; and
b) transmitting a data channel associated with the terminal identified in step a) to that terminal.
